# EUROPEAN PATENT APPLICATION

(11) **EP 1 343 102 A2**
(43) Date of publication of application: **10.09.2003**
(21) Application number: 02258780.2
(22) Date of filing: 19.12.2002
(51) Int. Cl.: G06F 17/60

(54) **Method and apparatus for providing a helpdesk service**

(30) Priority: 09.03.2002 GB 0205694
(71) Applicant: Fujitsu Services Limited, London EC2A 1SL (GB)
(72) Inventor: Smith, Simon, St Neots, Cambridgeshire PE19 2HA (GB); Rixon, Mark, Sandy, Bedfordshire SG19 1TY (GB); Hogan, Patrick, Hitchin, Hertfordshire SG5 2XE (GB)
(74) Representative: Guyatt, Derek Charles

(57) **Abstract**

A computer-implemented method for providing a helpdesk service comprises receiving an electronic request from a user for help on a specified problem, automatically performing a search in a knowledge base system to find potential solutions to the problem, and assigning a confidence rating to each potential solution found. If any potential solutions are found with confidence ratings greater than a threshold value, they are automatically returned to the user without involving a human agent. If no potential solution is found with a confidence rating greater than a threshold value, the request is automatically passed to a human agent for action. Any potential solutions with confidence ratings lower than the threshold value but greater than a second, lower threshold value are automatically presented to the agent as suggested solutions.

## Description

### Background to the invention

This invention relates to a method and apparatus for providing a helpdesk service.

In a conventional helpdesk service, customers contact the service by telephone or e-mail, and are put into contact with a human agent for advice. A problem with such a service, however, is that it is very labour intensive, relying on skilled and trained agents to handle all the requests.

Knowledge base systems exist, which allow users to search for solutions to problems. Such systems can be used by the agents in a helpdesk service, to help them find solutions to a customer's problem. Such systems may also be accessed directly by the customers, as a self-help measure, to search for solutions to their own problems.

The object of the present invention is to provide an improved helpdesk service, which enables more efficient use to be made of human agent resources.

### Summary of the invention

According to the invention, a computer-implemented method for providing a helpdesk service comprises the steps:
(a) receiving an electronic request from a user for help on a specified problem;
(b) automatically performing a search in a knowledge base system to find potential solutions to the problem, and assigning a confidence rating to each potential solution found;
(c) if a potential solution is found with a confidence rating greater than a threshold value, automatically returning the solution to the user without involving a human agent; and
(d) if no potential solution is found with a confidence rating greater than said threshold value, automatically passing the request to a human agent for action.

It can be seen that the invention thus provides a way of integrating a knowledge base with a helpdesk call management system, to provide synergy between them and to improve the efficiency of the way in which requests are handled. Specifically, the invention allows some of the requests to be handled completely automatically, without any intervention by a human agent, while ensuring that requests that cannot be handled automatically are passed to an agent.

### Brief description of the drawings

Figure 1 is a schematic block diagram of the helpdesk system.
Figure 2 is a flow chart showing the operation of the helpdesk system when it receives an e-mail.
Figure 3 is a flow chart showing the operation of the helpdesk system when an agent handles an e-mail.

### Description of an embodiment of the invention

One helpdesk system and method in accordance with the invention will now be described by way of example with reference to the accompanying drawings.

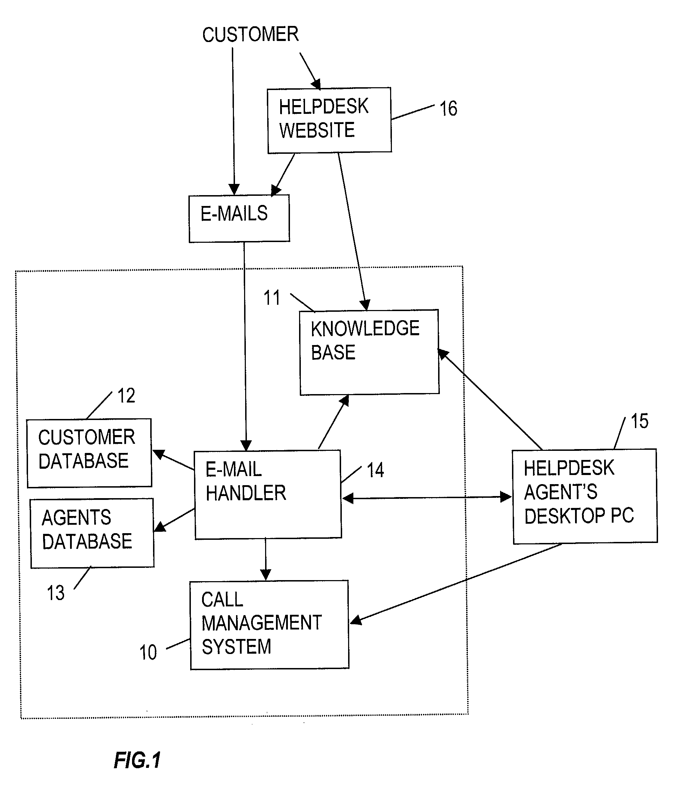

Figure 1 is a schematic block diagram of the helpdesk system. The system includes the following software components: call management system 10, knowledge base 11, customer database 12, agents database 13, and e-mail handler 14. The software components 10-14 may all run on separate computers, linked by a suitable network, or alternatively some or all of them may run on the same computer. The system also includes a number of desktop personal computers (PCs) 15, for use by human helpdesk agents.

The call management system 10 registers and logs the progress of service calls, by creating a call record for each call. Each call record is identified by a unique call number. A call record includes the following fields:
- details of the customer who raised the call,
- details of the customer's problem, and
- details of the proposed solution.
When a call has been dealt with, the corresponding call record is closed. In the present embodiment of the invention, the call management system comprises the Peregrine ServiceCentre call management software.

The knowledge base 11 holds details of known problems and their solutions. The knowledge base can be searched by keywords, to find solutions to a particular problem. When a solution is returned, it is assigned a confidence rating, indicating the level of confidence that the solution is appropriate to the problem. In the present embodiment of the invention, the knowledge base comprises the Primus Knowledge Base software.

The customer database 12 holds details of customers who may make requests, including their names, addresses, telephone numbers and e-mail addresses. In the case of an in-house help desk service, the customers may all be employees of a particular organisation, and in this case the customer database may be derived from the organisation's human resources database.

The agents database 13 holds details of the helpdesk agents and their skills. As will be described, it is used to decide which agent, or team of agents, to route a call to.

The e-mail handler 14 receives and processes e-mail service requests from customers. As will be described in more detail below, the processing includes: searching the knowledge base 11 for possible solutions to the customer's problem; automatically replying to the customer where the confidence rating of a solution is greater than a certain threshold value (75% in this embodiment); raising calls with the call management system 10; retrieving customer details from the customer database 12 for inserting into the call records; and passing calls to a helpdesk agent where the confidence level is less than or equal to the threshold value.

The desktop PCs 15 run helpdesk client software, providing a console screen that enables the helpdesk agents to view and to process service requests. In the present embodiment of the invention, the helpdesk client software comprises the Avaya AIC QConsole software.

Customers may send their service requests to the helpdesk system by sending e-mails from their own e-mail accounts direct to the helpdesk e-mail address, including text specifying the problem.

Customers may also contact the helpdesk by way of a helpdesk website 16. This contains the following:
- Information and news about any current system problems or planned outages.
- A self-help facility, allowing customers to access the knowledge base 11, to perform keyword searches so as to try to find solutions to their own problems.
- A service request form, that allows customers to submit their problems to the helpdesk.
- Request Forms.
- Links allowing the customer to contact the helpdesk by way of e-mail or WebChat.
Where a customer submits the service request form, after having previously performed a self-help search, the service request form is automatically tagged with the identity of any solutions that the customer has found. This information can be useful to the helpdesk agent, since it indicates what the customer may already have tried.

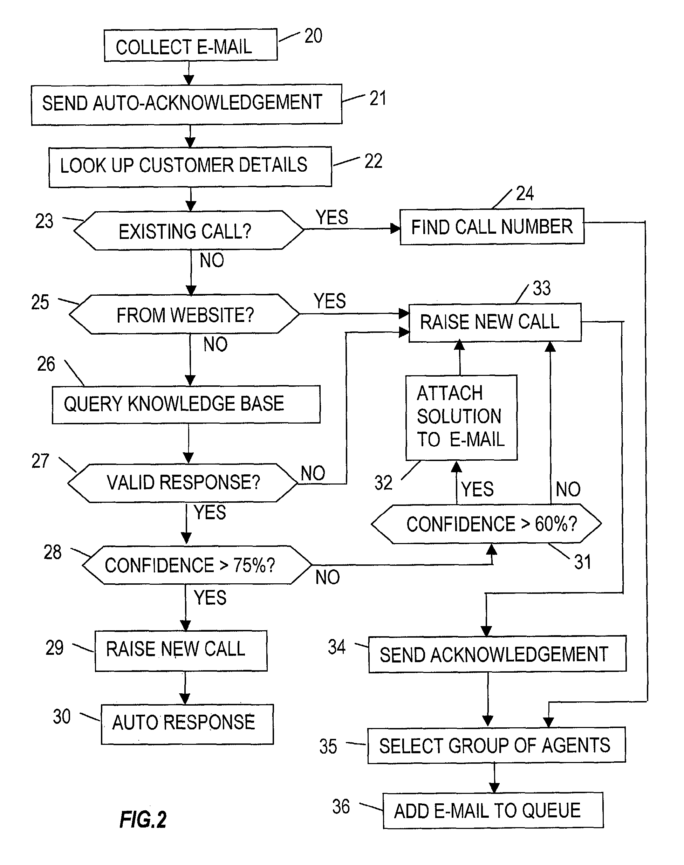

Figure 2 shows the operation of the helpdesk system when it receives an e-mail.

(Step 20) The e-mail handler 14 periodically collects incoming e-mail. As described above, e-mails from customers may be directly addressed to the helpdesk, or sent through the website 16, either by e-mails or via webforms.

(Step 21) For each e-mail, an acknowledgement message is sent automatically. Since this acknowledgement is being sent before any call has been logged, it merely consists of a simple text message such as "Thank you for the e-mail. This will be handled as soon as possible".

(Step 22) The e-mail handler uses the customer's SMPT address in the e-mail to look up the customer's details in the customer database 12. If details are found, they are saved for later use when raising a call. Otherwise, only the customer's e-mail address is saved.

(Step 23) A branch is then made according to whether or not this e-mail is a reply to a previous e-mail from the helpdesk system, i.e. whether it relates to an existing call.

(Step 24) If the e-mail relates to an existing call, its priority is increased, and the e-mail handler searches for the call number to which it relates. The flow then proceeds to step 35 below.

(Step 25) If the e-mail relates to a new call that came from the website, the flow jumps to step 33 below.

(Step 26) If the e-mail relates to a new call that did not come from the website, the customer's question is extracted from the e-mail and sent to the knowledge base 11. The knowledge base performs a search for possible solutions, and returns the top three solutions with the highest confidence ratings. The following information is provided for each solution: confidence rating, solution identity, title and text describing the solution.

(Step 27) If the knowledge base does not produce a valid response, the flow jumps to step 33 below.

(Step 28) Assuming that the response is valid, a branch is made according to whether or not the confidence rating of any solution is greater than a predetermined threshold value, in this example 75%.

(Step 29) If the confidence rating of any of the solutions is greater than 75%, the call management system 10 is requested to raise a new call, and to return a call number. The call management system is supplied with the customer's details (obtained from the customer database), the e-mail text, and the solution identity and title.

(Step 30) The e-mail handler then sends an e-mail reply to the customer, using a mail template, including the solution identity, title, text describing the solution, and call number. The call is then closed. It can be seen that, in this case, the call has been dealt with entirely automatically, without the intervention of the helpdesk agent.

(Step 31) If on the other hand the confidence level of the solutions is less than or equal to 75%, a branch is now made according to whether the confidence level of any solution is greater than 60%.

(Step 32) If the confidence level of any solution is greater than 60%, the e-mail is tagged by attaching the solutions to it, for use as a suggested solution (as will be described later).

(Step 33) The solution identity and title are then sent to the call management system 10, requesting it to raise a new call, and to return a call number.

(Step 34) The e-mail handler then sends a (second) e-mail acknowledgement to the customer, this time including the call number.

(Step 35) The e-mail handler now performs a keyword search through the agents database 13, to select a group of agents with skills to match the particular problem.

(Step 36) If a group is found, the e-mail is added to a queue waiting for the selected group to handle it. If the e-mail remains in this queue for more than two hours, it is automatically transferred to a queue for a default group. Alternatively, if no group with the relevant skills can be found, the e-mail is transferred to the queue for the default group.

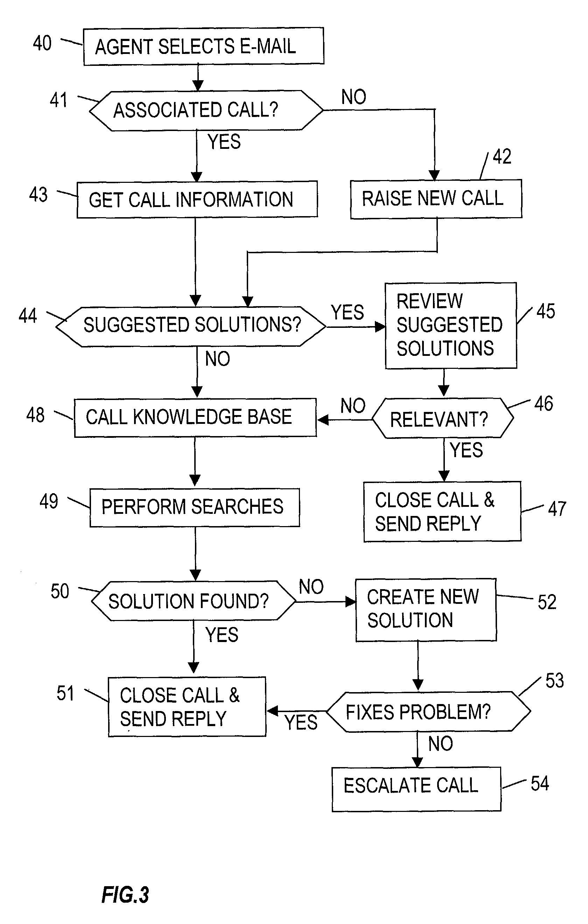

Figure 3 shows the operation of the helpdesk system when an agent handles an e-mail.

(Step 40) E-mails waiting to be processed appear as icons on the agent's console. The agent can select any e-mail by double clicking on its icon.

(Steps 41, 42) If the e-mail does not have any call associated with it, the agent can now create a new call.

(Step 43) If the e-mail has a call associated with it, the e-mail handler passes the call number to the call management system, asking it to supply the information about the call. This information is displayed in a pop-up window. At the same time, the e-mail is opened.

(Step 44, 45) If the e-mail has been tagged with any suggested solutions (at step 32 above), the suggested solution or solutions are displayed to the agent in a pop-up screen. The agent can then review these solutions.

(Step 46, 47) If the agent decides that one of the suggested solutions is relevant, the agent can close the call and send a reply e-mail to the customer, informing the customer of the solution. Thus, it can be seen that the system provides a way of allowing these relatively low-confidence solutions (i.e. those with confidence ratings between 60% and 75%) to be used, subject to review by the agent.

(Step 48) If the e-mail has not been tagged with any suggested solutions, or if the agent rejects the suggested solutions, the agent can then click on a Search button to call up the knowledge base. If the knowledge base is not currently open, a log-in screen is displayed, to allow the agent to log in.

(Step 49) The knowledge base then starts a new session, allowing the agent to perform one or more keyword searches, in an attempt to find a solution to the problem.

(Steps 50,51) If the agent finds a solution in the knowledge base, the agent replies to the e-mail accordingly, and closes the call.

(Step 52) If the agent cannot find a solution in the knowledge base, the agent tries to create a new solution for the problem.

(Step 53) If the solution fixes the problem, it is saved in the knowledge base, and flow proceeds to step 51.

(Step 54) If the solution does not fix the problem, the call is escalated to a second-line helpdesk agent, and an e-mail reply is sent to the customer informing the customer of this.

In summary, it can be seen that the system provides two automated levels of response:
- A first level, which allows the system to respond to queries entirely automatically, based on the results of a search in the knowledge base, provided those solutions have sufficiently high confidence ratings.
- A second level, which automatically forwards solutions with lower confidence ratings as suggestions to the helpdesk agents, to allow those solutions to be used after review by the agents.

### Some possible modifications

It will be appreciated that many modifications may be made to the system as described above without departing from the scope of the present invention. In particular, the system may allow the different levels of automated response to be selectively switched off; this may be useful when the system first goes live, allowing the automated response to be switched on only when the knowledge base has been sufficiently developed in quantity and quality. Of course, the particular threshold levels mentioned are only examples, and can be varied. Also, different software products to those mentioned above may be used for searching for solutions and managing calls.

## Claims

1. A computer-implemented method for providing a helpdesk service, comprising the steps:
(a) receiving an electronic request from a user for help on a specified problem;
(b) automatically performing a search in a knowledge base system to find potential solutions to the problem, and assigning a confidence rating to each potential solution found;
(c) if a potential solution is found with a confidence rating greater than a threshold value, automatically returning the solution to the user without involving a human agent; and
(d) if no potential solution is found with a confidence rating greater than said threshold value, automatically passing the request to a human agent for action.

2. A method according to claim 1 wherein, when a request is passed to a human agent for action, the human agent is automatically presented with any potential solutions found that have confidence ratings lower than said threshold value but greater than a second, lower threshold value.

3. A method according to either preceding claim, including automatically creating a call record to log the details of the query, wherein, when a solution is automatically returned to the user without involving a human agent, details of the query and the solution are automatically written to the call record, and the call record is then automatically closed.

4. A method according to claim 3, including automatically retrieving details of the user who made the request and inserting those details into the call record.

5. A method according to any preceding claim, wherein the user submits said electronic request by way of a website, including enabling the user to perform an initial self-help search in said knowledge base system through said website, and passing results of said self-help search to said human agent along with said request.

6. A computerized helpdesk system comprising:
(a) means for receiving an electronic request from a user for help on a specified problem;
(b) a knowledge base system holding details of potential solutions to problems;
(c) means for automatically performing a search in a knowledge base system to find potential solutions to said specified problem, and for assigning a confidence rating to each potential solution found;
(d) means for automatically returning potential solutions with confidence ratings greater than a predetermined threshold value to the user, without involving a human agent; and
(e) means for automatically passing the request to a human agent for action when no potential solution is found with a confidence rating greater than said predetermined threshold value.

7. A system according to claim 6 further including means for automatically presenting the human agent with any potential solutions found that have confidence ratings lower than said threshold value but greater than a second, lower predetermined threshold value, when the request is passed to the human agent for action.

8. A system according to claim 6 or 7, including means for automatically creating a call record to log the details of the query, and means for automatically writing details of the query and the solution to the call record when a solution is automatically returned to the user without involving a human agent, and then automatically closing the call record.

9. A system according to claim 8, including means for automatically retrieving details of the user who made the request and inserting those details into the call record.

10. A system according to any of claims 6 to 9, including means for enabling the user to submit said electronic request by way of a website, and means for enabling the user to perform an initial self-help search in said knowledge base system through said website, and for passing results of said self-help search to said human agent along with said request.
